# EUROPÄISCHE PATENTSCHRIFT

(11) **EP 0 594 105 B1**
(45) Veröffentlichungstag und Bekanntmachung des Hinweises auf die Patenterteilung: **31.01.1996**
(21) Anmeldenummer: 93116797.7
(22) Anmeldetag: 18.10.1993
(51) Int. Cl.: F16L 23/024, F16L 23/16

(54) **Flansch-Rohrverbindung**
Flanged pipe coupling
Raccordement de tuyau à bride

(30) Priorität: 19.10.1992 DE 4235166
(43) Veröffentlichungstag der Anmeldung: 27.04.1994
(73) Patentinhaber: WILO GmbH, D-44263 Dortmund (DE)
(72) Erfinder: Neuhaus-Melsheimer, Manfred, D-4600 Dortmund (DE)
(74) Vertreter: Cohausz, Helge B., Dipl.-Ing.

(56) Entgegenhaltungen:
- EP-A- 0 467 229
- DE-A- 2 011 513
- US-A- 1 806 710
- US-A- 1 956 683

## Beschreibung

Die Erfindung betrifft eine Flansch-Rohrverbindung mit jeweils einem ringförmigen, nach außen vorstehenden Flansch an jedem Rohrende, wobei die beiden Flansche durch Schrauben aneinander befestigbar sind und zumindest einer der beiden Flansche als ein Innengewinde aufweisender Gewindering ausgebildet und auf einem Außengewinde eines der Rohrenden drehbar gelagert ist.

Es sind Rohrverbindungen üblich, bei denen die Rohrenden Flansche bilden, die miteinander verschraubt werden. Wird eine solche Flansch-Rohrverbindung zum Anschließen von Geräten wie z.B. Pumpen verwendet, so geschieht es häufig, daß die Längen der Rohre und der Geräte nicht exakt sind und damit ein Spalt zwischen den beiden Flanschen besteht. Häufig wird dieser Spalt durch ein kräftiges Anziehen der Schrauben der Flanschverbindung überbrückt, so daß unzulässig hohe Zugspannungen entstehen, die Schäden an Armaturen, Maschinen und Pumpen hervorrufen.

Aus der US 1 956 683 ist eine Rohrkupplung für das Verbinden von Rohrteilen mit auf das Gewinde der Rohrenden aufschraubbaren Flanschen, die mit ihren ebenen Flanschflächen aneinander liegend durch Schraubverbindungen zusammengehalten werden bekannt. Die Abdichtung der Flanschflächen erfolgt mittels eines Abdichtungsringes oder eines kompressiblen Packungsringes.

Diese bekannte Rohrkupplung ist nur für Flansch-Flansch-Verbindungen geeignet, kompakt und damit für hohe Anzugsmomente ausgelegt, die zu den bereits erwähnten Schäden führen.

Aufgabe der Erfindung ist es, eine Flanschverbindung derart zu verbessern, daß ein zwischen den Flanschen befindlicher Zwischenraum bei einfacher Konstruktion und Handhabung überbrückbar ist, ohne Zugspannungen zu erzeugen.

Diese Aufgabe wird erfindungsgemäß dadurch gelöst, daß an der dem anderen Flansch zugekehrten Seite des Gewinderinges ein das Rohrwandende U- oder L-förmig übergreifender Dichtungsring angeordnet ist, der mit dem Gewindering auf dem Rohrende achsial verschieblich ist und am Flansch abdichtend anliegt.

Diese Flanschverbindung erzeugt einen Längenausgleich verschiedener Größe, d.h. die Flanschverbindung ermöglicht es, einen Spalt zwischen den beiden Rohrenden exakt auszufüllen, da sie in ihrem Längenausgleich sehr genau anpaßbar ist. Zugspannungen werden damit sicher verhindert und es wird dabei immer noch eine Verbindung gleich hoher Festigkeit und Dichtigkeit erzeugt. Dabei ist die Konstruktion von hoher Einfachheit und sehr leicht zu handhaben.

Vorzugsweise wird vorgeschlagen, daß der Abdichtungsring ein vom Gewindering getrenntes Teil ist. Alternativ kann aber auch der Abdichtungsring mit dem Gewindering einstückig sein.

Um eine besonders sichere Abdichtung zu erreichen, wird vorgeschlagen, daß der Abdichtungsring einen buchsenförmigen Bereich bildet, der in das Innere des Rohrendes hineinreicht. Hierbei kann der buchsenförmige Bereich in seiner Außenwand eine Ringnut besitzen, in der ein O-Dichtring einliegt, der an der Innenwand des Rohrendes dichtend anliegt.

Ferner ist von größtem Vorteil, wenn der Abdichtungsring einen äußeren buchsenförmigen Bereich aufweist, der mit seinem Ende am Gewindering anliegt oder befestigt ist. Auch kann der Abdichtungsring eine koaxiale Ringnut bilden, in der das Rohrende einliegt. Hierdurch wird eine besonders sichere Abdichtung bei hoher Stabilität erreicht.

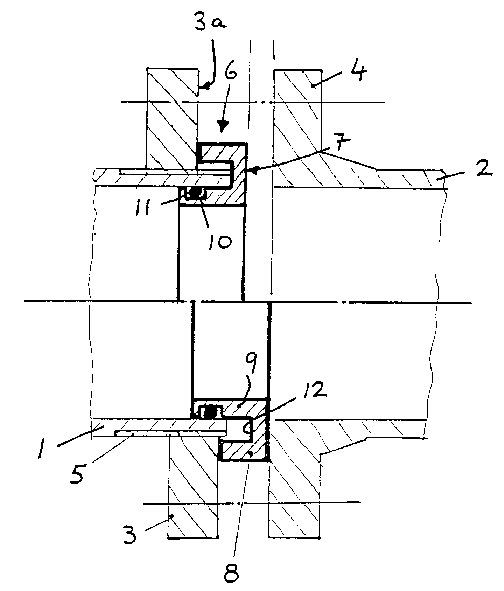

Ein Ausführungsbeispiel ist in der Zeichnung in einem achsialen Schnitt dargestellt und wird im folgenden näher beschrieben:

Ein erstes Rohr 1 soll an einem zweiten Rohr 2 befestigt werden. Das erste Rohr weist hierzu einen Flansch 3 auf, der an einem Gegenflansch 4 des zweiten Rohrs durch Schrauben in üblicher Weise angeschraubt wird.

Der Flansch 3 des ersten Rohres ist ein Gewindering, der mit seinem Innengewinde auf einem Außengewinde 5 aufgeschraubt ist, das am Ende des Rohres 1 auf dessen Außenseite angebracht ist. Das Außengewinde 5 reicht bis zum Ende des Rohres.

Am Ende des Rohres 1 ist ein Abdichtungsring 6 gelagert, der eine dem Rohr 2 zugewandte ringförmige Anlagefläche 7 bildet, die in der unten dargestellten, abgedichteten Lage an der Stirnseite des zweiten Rohrs und insbesondere auch am Gegenflansch 4 zur Anlage gelangt.

Der Abdichtungsring 6 weist einen äußeren buchsenförmigen Bereich 8 auf, der das Ende des Rohrs 1 koaxial ringförmig umgibt und an der stirnförmigen Seitenfläche 3a des Gewinderings 3 anliegt. Im Ausführungsbeispiel ist der Abdichtungsring 6 im Querschnitt U-förmig und weist damit ferner einen inneren, koaxialen buchsenförmigen Bereich 9 auf, der in das Innere des ersten Rohres hineinreicht und an seiner Außenseite eine Ringnut 10 besitzt, in der ein O-Ring 11 einliegt, der an der Innenwand des ersten Rohres abdichtend anliegt.

Der Abdichtungsring 6 umgreift somit das Ende des Rohres 1 U-förmig und bildet damit eine Ringnut 12, in der das Rohrende einliegt. Hierbei ist der Abdichtungsring 6 auf diesem Rohrende begrenzt verschieblich.

Bei einer Flanschverbindung mit fehlender Länge wird der Gewindering 3 als loser Flansch zum zweiten Rohr hingedreht, wobei der Abdichtungsring 6 zum zweiten Rohr hin verschoben wird, bis die stirnseitige Dicht- bzw. Anlagefläche 7 des Ringes 6 am Gegenflansch 4 und/oder an der Stirnseite des Rohres 2 anliegt. Danach können die in beiden Flanschen, bzw. im Gewindering 3 und Gegenflansch 4 einliegenden achsparallelen Schrauben festgezogen werden.

In Abweichung vom dargestellten Ausführungsbeispiel kann der Abdichtungsring 6 einstückig mit dem Gewindering 3 ausgeführt sein. Ferner kann der Abdichtungsring 6 statt U-förmig auch L-förmig oder in Form einer einfachen geraden Buchse sein. Damit kann der Abdichtungsring 6 auch nur ein Vorsprung des Gewinderings 3 sein. Ferner kann sich an der Anlagefläche 7 eine Ringnut mit einem O-Ring befinden.

## Patentansprüche

1. Flansch-Rohrverbindung mit jeweils einem ringförmigen, nach außen vorstehenden Flansch (3,4) an jedem Rohrende, wobei die beiden Flansche (3,4) durch Schrauben gegeneinander befestigbar sind und zumindest einer der beiden Flansche als ein Innengewinde aufweisender Gewindering (3) ausgebildet und auf einem Außengewinde (5) eines der Rohrenden drehbar gelagert ist, **dadurch gekennzeichnet,** daß an der dem anderen Flansch (4) zugekehrten Seite des Gewinderinges (3) ein das Rohrwandende U- oder L-förming übergreifender Dichtungsring (6) angeordnet ist, der mit dem Gewindering (3) auf dem Rohrende achsial verschieblich ist und am anderen Rohr bzw. Flansch (4) abdichtend anliegt.

2. Flansch-Rohrverbindung nach Anspruch 1, **dadurch gekennzeichnet,** daß der Abdichtungsring (6) ein vom Gewindering (3) getrenntes Teil ist.

3. Flansch-Rohrverbindung nach Anspruch 1, **dadurch gekennzeichnet,** daß der Abdichtunzsring (6) mit dem Gewindering (3) einstückig ist.

4. Flansch-Rohrverbindung nach einem der vorherigen Ansprüche, **dadurch gekennzeichnet**, daß der Abdichtungsring (6) einen buchsenförmingen Bereich (9) bildet, der in das Innere des Rohrendes hineinreicht.

5. Flansch-Rohrverbindung nach Anspruch 5, **dadurch gekennzeichnet,** daß der buchsenförmige Bereich (9) in seiner Außenwand eine Ringnut (10) besitzt, in der ein O-Dicntring (11) einliegt, der an der Innenwand des Rohrendes dichtend anliegt,

6. Flansch-Rohrverbindung nach einem der vorherigen Ansprüche, **dadurch gekennzeichnet,** daß der Abdichtungsring (6) einen äußeren buchsenförmigen Bereich (8) aufweist, der mit seinem Ende am Gewindering (3) anliegt oder befestigt ist.

7. Flansch-Rohrverbindung nach einem der vorherigen Ansprüche, **dadurch gekennzeichnet,** daß der Abdichtungsring (6) eine koaxiale Ringnut (12) bildet, in der das Rohrende einliegt.

## Claims

1. A flanged pipe coupling having an annular outwardly projecting flange (3, 4) at each pipe end, wherein the two flanges (3, 4) can be attached in relation to one another by screws and at least one of the two flanges takes the form of a threaded ring (3) having an internal threading and is rotatably mounted on an external threading (5) of one of the pipe ends, characterized in that disposed on the side of the threaded ring (3) adjacent the upper flange (4) is a sealing ring (6) which engages over the pipe wall end in U-shape or L-shape and which is axially displaceable with the threaded ring (3) on the pipe end and bears sealably against the other pipe or flange (4).

2. A flanged pipe coupling according to claim 1, characterized in that the sealing ring (6) is a member separated from the threaded ring (3).

3. A flanged pipe coupling according to claim 1, characterized in that the sealing ring (6) is unitary with the threaded ring (3).

4. A flanged pipe coupling according to one of the preceding claims, characterized in that the sealing ring (6) forms a bush-shaped zone (9) which extends into the inside of the pipe end.

5. A flanged pipe coupling according to claim 5, characterized in that the outside wall of the bush-shaped zone (9) is formed with an annular groove (10) in which an O-ring seal (11) is disposed which bears sealably against the inside wall of the pipe end.

6. A flanged pipe coupling according to one of the preceding claims, characterized in that the sealing ring (6) has an outer bush-shaped zone (8) which bears against or is attached by its end to the threaded ring (3).

7. A flanged pipe coupling according to one of the preceding claims, characterized in that the sealing ring (6) forms a coaxial annular groove (12) in which the pipe end is disposed.

## Revendications

1. Raccord pour tubes à bride avec respectivement une bride annulaire (3,4) en saillie vers l'extérieur à chaque extrémité de tube, les deux brides (3,4) pouvant être fixées l'une contre l'autre au moyen de vis et au moins l'une des deux brides étant réalisée sous forme d'une bague taraudée (3) présentant un taraudage et étant montée pivotante sur un filetage (5) d'une des extrémités de tube,
caractérisé en ce qu'à la face de la bague taraudée (3) tournée vers l'autre bride (4) est disposée une bague d'étanchéité (6) enjambant en forme de U ou de L l'extrémité de la paroi du tube qui est coulissante axialement avec la bague filetée (3) sur l'extrémité du tube et est en appui étanche sur l'autre tube ou respectivement bride (4).

2. Raccord pour tubes à bride selon la revendication 1,
caractérisé en ce que la bague d'étanchéité (6) est une pièce séparée de la bague taraudée (3).

3. Raccord pour tubes à bride selon la revendication 1,
caractérisé en ce que la bague d'étanchéité (6) est d'une seule pièce avec la bague taraudée (3).

4. Raccord pour tubes à bride selon l'une des revendications précédentes,
caractérisé en ce que la bague d'étanchéité (6) forme une zone en forme de douille (9) qui pénètre à l'intérieur de l'extrémité du tube.

5. Raccord pour tubes à bride selon la revendication 4,
caractérisé en ce que la zone (9) en forme de douille possède dans sa paroi extérieure une rainure annulaire (10) dans laquelle est logé un joint torique d'étanchéité (10) qui est en appui étanchéifiant sur la paroi intérieure de l'extrémité du tube.

6. Raccord pour tubes à bride selon l'une des revendications précédentes,
caractérisé en ce que la bague d'étanchéité (6) présente une zone extérieure en forme de douille (8) qui est en appui ou fixée par son extrémité sur la bague taraudée (3).

7. Raccord pour tubes à bride selon l'une des revendications précédentes,
caractérisé en ce que la bague d'étanchéité (6) forme une rainure annulaire coaxiale (12) dans laquelle est logée l'extrémité du tube.
